## Europäisches Patentamt
## European Patent Office
## Office européen des brevets

(19)

(11) Veröffentlichungsnummer: **0 246 583**
**A2**

(12) **EUROPÄISCHE PATENTANMELDUNG**

(21) Anmeldenummer: 87107120.5

(22) Anmeldetag: 16.05.87

(51) Int. Cl.4 **C04B 35/26** , C04B 33/13 ,
C04B 35/00 , C04B 35/64 ,
F27D 3/12

(30) Priorität: 21.05.86 DE 3617041
09.05.87 DE 3715517

(43) Veröffentlichungstag der Anmeldung:
25.11.87 Patentblatt 87/48

(84) Benannte Vertragsstaaten:
AT BE CH DE ES FR GB IT LI LU NL SE

(71) Anmelder: DIDIER-WERKE AG
Lessingstrasse 16-18
D-6200 Wiesbaden(DE)

(72) Erfinder: Gerharz, Norbert
Bahnhofstrasse 41
D-5416 Hillscheid(DE)
Erfinder: Kessler, Eduard
Wiegandstrasse 24
D-5413 Bendorf(DE)
Erfinder: Kleinevoss, Albert, Dr.
Emser Strasse 36
D-5410 Höhr-Grenzhausen(DE)
Erfinder: Kleudgen, Hans
Concordiastrasse 61
D-5413 Bendorf(DE)
Erfinder: Kopia, Jochen
Vierwindenhöhe 46
D-5413 Bendorf(DE)
Erfinder: Stein, Bernd
Hans-Böckler-Strasse 57a
D-5450 Neuwied 13(DE)

(74) Vertreter: Brückner, Raimund, Dipl.-Ing.
c/o Didier-Werke AG Lessingstrasse 16-18
D-6200 Wiesbaden(DE)

(54) **Verfahren zur Herstellung dünner Platten.**

(57) Sehr dünne Platten aus keramischem Material geringer Bindungskraft sind schwer herstellbar, da die Festigkeit der Formlinge so gering ist, daß sie sich nach der Formung kaum einer Weiterbehandlung zuführen lassen. Es werden deshalb nach der Formung des keramischen Materials zu plattenförmigen Formlingen diese aus der Form in der Ebene ihrer Plattenfläche auf einen flachigen Träger aufgeschoben und auf diesem wenige Minuten lang so erhitzt, daß sich formstabilisierende Eisensulfate bilden.

## Verfahren zur Herstellung dünner Platten

Die Erfindung betrifft ein Verfahren zur Herstellung dünner Platten aus einem keramischen Material geringer Bindungskraft.

Sollen sehr dünne keramische Platten mit einer Kornstärke von weniger als 2,5 mm praktisch ohne Binder hergestellt werden, dann ergeben sich im Herstellungsverfahren beträchtliche Schwierigkeiten, da solche Formlinge mechanisch oder auf andere Weise nicht ohne Zerstörung aus der Form abgehoben werden können.

In der DE-OS 31 40 451 ist ein Verfahren zur Herstellung keramischer Formkörper beschrieben. Als Preßhilfsmittel wird ein Kieselsäureester verwendet.

Bei der Herstellung von Fliesen werden Formlinge der Fliesen über ein Transportband einem Trockenofen zugeführt, wenn deren Kantenbefestigung verbessert werden soll. Aufgrund der vergleichsweise großen Stärke der Fliesen-Formlinge und deren Tonbindung ist eine Festigkeit gegeben, die ein Ausheben der Formlinge aus der Formpresse erlaubt. Es treten hier keine Schwierigkeiten bei der Handhabung der Formlinge auf. Auf die Herstellung von Platten, die wesentlich dünner als Fliesen sind und deren keramisches Material praktisch kein Bindemittel enthält, sind die Verfahren zur Herstellung von Fliesen nicht anwendbar.

Aufgabe der Erfindung ist es, ein Verfahren der eingangs genannten Art vorzuschlagen, durch das sehr dünne plattenförmige Formlinge so stabilisiert werden, daß sie sich danach ohne Zerstörung handhaben lassen.

Erfindungsgemäß ist obige Aufgabe durch die Merkmale des kennzeichnenden Teils des Anspruchs 1 gelöst.

Durch die Zugabe von Schwefelsäure und Wasser zu dem keramischen Material, beispielsweise aus oxidischen Eisenverbindungen, wie Hämatit, Magnetit, Goethit, wird beim Formpreßvorgang zunächst noch keine Festigkeit erreicht.

Die Formlinge werden nicht aus der Form ausgehoben, sondern aus der Form direkt auf den flächigen Träger aufgeschoben. Ihre Plattenfläche ist dabei von der Form bzw. dem flächigen Träger abgestützt, so daß sie trotz fehlender Stabilität nicht zerstört werden.

Durch das kurzzeitige Erhitzen der Formlinge bilden sich in diesen durch die Reaktion der Schwefelsäure mit den Eisenverbindungen, insbesondere mit dem Eisenhydroxid, Eisensulfate, die den Formlingen eine für die Weiterbehandlung ausreichende Festigkeit geben. Die sofort nach der Formung erfolgende Temperaturbehandlung der Formlinge führt zu einer guten Grünfestigkeit. Ohne die zusätzliche Temperaturbehandlung vor der Weiterbehandlung wäre eine Fertigung solcher Platten kaum möglich.

Der Träger kann von einer Stahlplatte oder einem Stahl-Förderband gebildet werden. Zur Erhitzung der Formlinge auf dem Träger kann entweder der Träger selbst beheizt sein, oder er kann in eine Heizkammer eingefahren werden.

Ein Ausführungsbeispiel der Erfindung ist im folgenden beschrieben:

Es wird einer keramischen Masse aus Eisenverbindungen, wie beispielsweise Hämatit, eine geringe Menge, zwischen 1 Gew.-% und 5 Gew.-% Schwefelsäure und Wasser zugegeben.

In einer Fliesenpresse werden aus der keramischen Masse ohne besondere Binder Formlinge einer Dicke von weniger als 2,5 mm geformt. Diese werden danach in der Ebene ihrer Plattenfläche nach vorn auf eine Stahlplatte aufgeschoben. Ihre Plattenfläche, d.h. ihre große Oberfläche, ist bei diesem Aufschiebevorgang noch von der Form oder schon von der Stahlplatte unterstützt. Die Formlinge werden sodann auf der Stahlplatte aufliegend etwa 3 min bis 7 min bei einer Temperatur zwischen 150°C und 400°C erhitzt. Das Erhitzen kann entweder in einer Heizkammer oder auf einer beheizten Platte erfolgen. Durch dieses Erhitzen bilden sich in den Formlingen Eisensulfate. Dadurch erhalten die Formlinge eine Festigkeit, die es erlaubt, nun die Formlinge von der Stahlplatte abzunehmen, ohne daß sie dabei zerstört werden. Die Formlinge können dann zu einer Weiterbehandlungsstation transportiert werden.

## Ansprüche

1. Verfahren zur Herstellung dünner Platten aus einem keramischen Material geringer Bindungskraft, dadurch gekennzeichnet, daß dem keramischen Material Schwefelsäure und Wasser zugegeben werden, daß das keramische Material danach zu plattenförmigen Formlingen geformt wird und die Formlinge aus der Form in der Ebene ihrer Plattenfläche auf einen flächigen Träger aufgeschoben werden, daß die Formlinge auf dem Träger plan aufliegend wenige Minuten lang erhitzt werden, so daß sich Eisensulfate bilden, und daß erst danach die Formlinge zur Weiterbehandlung transportiert werden.

2. Verfahren nach Anspruch 1, dadurch gekennzeichnet, daß dem keramischen Material zusammen 1 Gew.-% bis 5 Gew.-% Schwefelsäure und Wasser beigemischt werden.

3. Verfahren nach Anspruch 1 oder 2, dadurch gekennzeichnet, daß das keramische Material aus oxidischen Eisenverbindungen besteht..

4. Verfahren nach einem der vorhergehenden Ansprüche, dadurch gekennzeichnet, daß die Formlinge auf eine Temperatur zwischen 150°C und 400°C erhitzt werden.

5. Verfahren nach einem der vorhergehenden Ansprüche, dadurch gekennzeichnet, daß die Formlinge auf dem Träger etwa 3 min bis 7 min erhitzt werden.

6. Verfahren nach einem der vorhergehenden Ansprüche, dadurch gekennzeichnet, daß zur Erhitzung der Formlinge der Trager beheizt wird.

7. Verfahren nach einem der vorhergehenden Ansprüche, dadurch gekennzeichnet, daß zur Erhitzung der Formlinge diese mit dem Trager in eine Heizkammer eingefahren werden.

8. Verfahren nach einem der vorhergehenden Ansprüche, dadurch gekennzeichnet, daß die Formlinge bei der Formung auf eine Dicke kleiner als 2,5 mm gepreßt werden.

9. Verfahren nach einem der vorhergehenden Ansprüche, dadurch gekennzeichnet, daß als Träger eine Stahlplatte verwendet wird.

10. Verfahren nach einem der vorhergehenden Ansprüche 1 bis 8, dadurch gekennzeichnet, daß als Träger ein Stahl-Förderband verwendet wird.